# EUROPEAN PATENT SPECIFICATION

(11) **EP 2 657 472 B1**
(45) Date of publication and mention of the grant of the patent: **18.03.2015**
(21) Application number: 12183312.3
(22) Date of filing: 06.09.2012
(51) Int. Cl.: F01N 1/08, F01N 3/28

(54) **Muffler and saddle-ride type vehicle**
Schalldämpfer und Sattelfahrzeug
Silencieux et véhicule à selle

(30) Priority: 27.04.2012 JP 2012103610
(43) Date of publication of application: 30.10.2013
(73) Proprietor: Yamaha Hatsudoki Kabushiki Kaisha, Iwata-shi, Shizuoka 438-8501 (JP)
(72) Inventor: Akiyama, Kiyokazu, Iwata-shi, Shizuoka 438-8501 (JP)
(74) Representative: Grünecker, Kinkeldey, Stockmair & Schwanhäusser

(56) References cited:
- JP-A- 2010 276 000

## Description

The present invention relates to a muffler for a saddle-ride type vehicle **according to the preamble of independent claim 1** and a saddle-ride type vehicle having such muffler. **Such a muffler for a saddle-ride type vehicle can be taken from the prior art document** JP 2010 276000 A**. Said document discloses muffler having a pipe adapted to be connected with the engine. A cone-shaped connecting portion is provided for connecting the catalyst with said pipe 23. Said cone shaped connecting portion comprises a side section that is parallel to the catalyst and the outer pipe portion and a side section being inclined with said main direction so that the diameter increases in downward direction of exhaust flow.**

Some mufflers for saddle-ride type vehicles include a catalyst. For example, JP-A-2006-104945 discloses a motorcycle equipped with a unit swing. The unit swing refers to a structure that an engine unit and a muffler are pivotably attached to a vehicle body frame. FIG. 8 is a cross-sectional view of a structure of a muffler described in JP-A-2006-104945. As illustrated in FIG. 8, a muffler includes a catalyst 101, an inner exhaust pipe 102 and an outer pipe 103. The inner exhaust pipe 102 accommodates the catalyst 101. The outer pipe 103 accommodates the inner exhaust pipe 102. The outer pipe 103 includes an opening portion 104 to which an upstream side end portion of the inner exhaust pipe 102 is connected. The inner exhaust pipe 102 includes a first pipe portion 111, a second pipe portion 112, a third pipe portion 113 and a fourth pipe portion 114. The first pipe portion 111 is extended from the opening portion 104 in the axial direction of the outer pipe 103. The first pipe portion 111 accommodates the catalyst 101. The second pipe portion 112 is extended from the first pipe portion 111 in the axial direction of the outer pipe 103. The third pipe portion 113 is formed in a U-shape bent from the second pipe portion 112 towards the opening portion 104. The fourth pipe portion 114 is extended from the third pipe portion 113 towards the opening portion 104 in the axial direction of the outer pipe 103. The tip of the fourth pipe portion 114 is positioned over the first pipe portion 111.

To reliably produce a long path length of an exhaust pipe through which the exhaust gas from the engine passes, the exhaust pipe can be assumed to be elongated between the engine and the muffler. In this case, however, the distance between the muffler and the engine is increased. Especially, in the aforementioned unit-swing type engine unit, a drawback is produced by increase in distance between the muffler and the engine. In short, the distance between the muffler and the pivot center of the engine unit is increased when the distance between the muffler and the engine is increased. Therefore, the load acting on a support structure of the engine unit is increased while the engine unit pivots. It is thereby required to enhance the strength of the support structure of the engine unit. Accordingly, increase in size of the engine unit is inevitable. Thus, to reliably produce a long path length of the exhaust pipe through which the exhaust gas from the engine passes, it is preferable to elongate the exhaust pipe disposed inside the muffler not to elongate the exhaust pipe disposed between the engine and the muffler.

However, a drawback of increase in size of the muffler is produced when the exhaust pipe disposed inside the muffler is elongated. Especially, when the muffler is elongated, the distance between a rear end portion of the muffler and a support position of the muffler is increased. In this case, the load acting on the support structure of the muffler is increased while the engine unit pivots. Therefore, it is required to enhance the strength of the support structure of the muffler, and increase in size of the engine unit is inevitable.

It is an object of the present invention to provide a muffler for a saddle-ride type vehicle that reliably produce a long path length of an exhaust pipe inside a muffler and simultaneously inhibit increase in length of the muffler.

According to the present invention said object is solved by a muffler for a saddle-ride type vehicle having the features of independent claim 1. Preferred embodiments are laid down in the dependent claims.

A muffler according to a first aspect is a muffler for a saddle-ride type vehicle and includes a catalyst, an inner exhaust pipe and an outer pipe. The inner exhaust pipe accommodates the catalyst. The outer pipe accommodates the inner exhaust pipe. The outer pipe includes a first opening portion and a main body pipe portion. An upstream side end portion of the inner exhaust pipe is connected to the first opening portion. The main body pipe portion is extended in a predetermined first direction. The inner exhaust pipe includes a first pipe portion, a second pipe portion, a third pipe portion and a fourth pipe portion. The first pipe portion accommodates the catalyst and is extended from the opening portion in a second direction. The second direction is slanted with respect to the first direction. The second pipe portion is extended from the first pipe portion in a direction parallel to the first direction. The third pipe portion has a shape bent in a U-shape from the second pipe portion towards the first opening portion. The fourth pipe portion is extended from the third pipe portion in a direction parallel to the first direction. A center axis of the first pipe portion is slanted with respect to the center axis of the main body pipe portion.

A muffler according to a second aspect relates to the muffler according to the first aspect, and wherein a tip of the fourth pipe portion is not overlapped with the catalyst seen in a direction perpendicular to the first direction. Hence, the tip of the fourth pipe portion is further rearward then a rear end of the catalyst seen in a direction perpendicular to the first direction.

A muffler according to a third aspect relates to the muffler according to the second aspect, and wherein an outer diameter of the first pipe portion is greater than an outer diameter of the second pipe portion.

A muffler according to a fourth aspect relates to the muffler according to one of the first to third aspects, and wherein a conceptual line extended from the fourth pipe portion in the direction parallel to the first direction intersects with the catalyst in a side view of the muffler.

A muffler according to a fifth aspect relates to the muffler according to the fourth aspect, and wherein the fourth pipe portion includes a closed tip. The fourth pipe portion includes an aperture, communicated with an inside of the fourth pipe portion, on a lateral surface thereof.

A muffler according to a sixth aspect relates to the muffler according to the first aspect, and wherein the outer pipe includes a circular cone portion. The circular cone portion has a shape with a diameter increased downstream. The circular cone portion is disposed between the first opening portion and the main body pipe portion. The first pipe portion is at least partially disposed inside the circular cone portion.

A muffler according to a seventh aspect relates to the muffler according to the sixth aspect, and wherein the circular cone portion and the first opening portion are concentrically disposed.

A muffler according to an eighth aspect relates to the muffler according to the seventh aspect, and wherein the main body pipe portion is disposed concentrically to the circular cone portion and the first opening portion.

A muffler according to a ninth aspect relates to the muffler according to one of the first to eighth aspects, and wherein the second direction is slanted with respect to a center axis of the first opening portion.

A muffler according to a tenth aspect relates to the muffler according to the ninth aspect, and wherein an extended line of the center axis of the first opening portion is overlapped with the catalyst.

A muffler according to an eleventh aspect relates to the muffler according to one of the first to tenth aspects, and further includes an outlet pipe. The outer pipe further includes a second opening portion. The second opening portion is disposed away from the first opening portion in the first direction. The outlet pipe includes an end portion disposed inside the outer pipe and is inserted into the second opening portion. The end portion of the outlet pipe has a shape with a diameter increased upstream.

A saddle-ride type vehicle according to a twelfth aspect includes a vehicle frame and an engine unit. The engine unit is pivotably attached to the vehicle body frame. The engine unit includes an engine, an outer exhaust pipe and the muffler according to one of the first to eleventh aspects. The outer exhaust pipe connects the engine and the first opening portion.

A saddle-ride type vehicle according to a thirteenth aspect relates to the saddle-ride type vehicle according to the twelfth aspect, and further includes a tandem footrest of a foldable type. The engine unit further includes a radiator disposed laterally to the engine. The tandem footrest is disposed outwards of the radiator in a vehicle transverse direction. An outer lateral end of the muffler is positioned inwards of an inner lateral end of a footrest surface of the tandem footrest in the vehicle transverse direction, when the tandem footrest is set to be in a deployed state.

A saddle-ride type vehicle according to a fourteenth aspect relates to the saddle-ride type vehicle according to one of the twelfth and thirteenth aspects, and further includes a rear wheel rotatably supported by the engine unit. A rear end portion of the muffler is overlapped with the rear wheel in a vehicle side view.

A saddle-ride type vehicle according to a fifteenth aspect relates to the saddle-ride type vehicle according to one of the twelfth to fourteenth aspects, and wherein the rear wheel includes a rim and a tire attached to the rim. A rear end of the outer pipe of the muffler is positioned radially inwards of an inner peripheral surface of the wheel.

A saddle-ride type vehicle according to a sixteenth aspect relates to the saddle-ride type vehicle according to one of the twelfth to fifteenth aspects, and wherein the engine unit further includes a bracket. The bracket is attached to the engine and supports the muffler in a cantilevered state.

According to the muffler of the first aspect, the first pipe portion is disposed for slanting with respect to the first direction corresponding to the extended direction of the outer pipe. Therefore, it is possible to reliably produce a long path length of the inner exhaust pipe and simultaneously inhibit increase in length of the muffler.

According to the muffler of the second aspect, the inner exhaust pipe can be compactly disposed within the outer pipe.

According to the muffler of the third aspect, the first pipe portion has an outer diameter greater than that of the second pipe portion. Therefore, the first pipe portion can accommodate a catalyst with a large size. Further, the tip of the fourth pipe portion is not overlapped with the catalyst seen in a direction perpendicularly to the first direction. Therefore, the inner exhaust pipe can be compactly disposed within the outer pipe even when the first pipe portion has a diameter greater than that of the second pipe portion.

According to the muffler of the fourth aspect, the inner exhaust pipe can be compactly disposed within the outer pipe.

According to the muffler of the fifth aspect, the high-temperature exhaust gas can be inhibited from being directly blown against the catalyst.

According to the muffler of the sixth aspect, the first pipe portion is at least partially disposed within the circular cone portion. Therefore, the inner exhaust pipe can be compactly disposed within the outer pipe by disposing the first pipe portion, which is disposed in a slant posture, along the slope of the circular cone portion.

According to the muffler of the seventh aspect, the inner exhaust pipe can be compactly disposed within the outer pipe.

According to the muffler of the eighth aspect, the inner exhaust pipe can be compactly disposed within the outer pipe.

According to the muffler of the ninth aspect, the exhaust gas obliquely flows into the catalyst within the first pipe portion through the first opening portion. Therefore, the exhaust gas passes through a wide range of the catalyst compared to the case that the exhaust gas flows straight into the catalyst. Accordingly, the catalyst can be enhanced in its efficiency.

According to the muffler of the tenth aspect, the exhaust gas, flown into the first pipe portion through the first opening portion, easily hits the catalyst. Accordingly, the catalyst can be enhanced in its efficiency.

According to the muffler of the eleventh aspect, noise can be reduced by the shape of the end portion of the outlet pipe.

According to the muffler of the twelfth aspect, it is possible to reliably produce a long path length of the exhaust pipe disposed inside the muffler and simultaneously inhibit increase in length of the muffler.

According to the muffler of the thirteenth aspect, the engine unit can be reduced in its size in the vehicle transverse direction.

According to the muffler of the fourteenth aspect, the engine unit can be reduced in its size.

According to the muffler of the fifteenth aspect, the engine unit can be reduced in its size.

According to the muffler of the sixteenth aspect, the number of members for supporting the muffler can be reduced. Further, the muffler is shorted inhibited in its length. Therefore, the bracket can support the muffler with sufficient strength even in a cantilevered state.

### Brief Description of Drawings

FIG 1 is a side view of a saddle-ride type vehicle according to an exemplary embodiment of the present teaching.
FIG. 2 is a cross-sectional view of a muffler.
FIG. 3 is a cross-sectional view of the muffler of FIG 2 sectioned along a line III-III.
FIG. 4 is a side view of a portion of the saddle-ride type vehicle.
FIG 5 is a plan view of a portion of the saddle-ride type vehicle seen from a bottom side.
FIG. 6 is a rear view of a portion of the saddle-ride type vehicle.
FIG. 7 is a side view of a portion of the saddle-ride type vehicle in a deployed state of a vehicle stand.

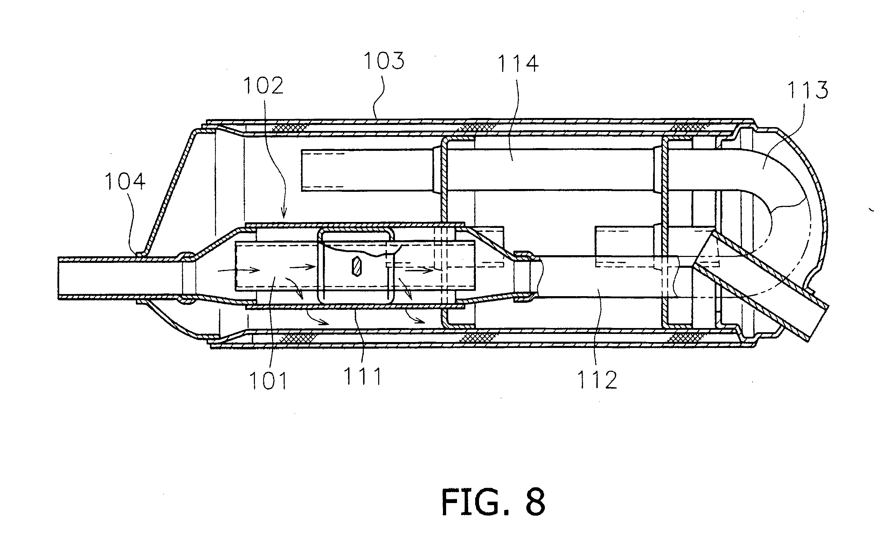

FIG. 8 is a cross-sectional view of a muffler according to a conventional art.

### Description of Embodiments

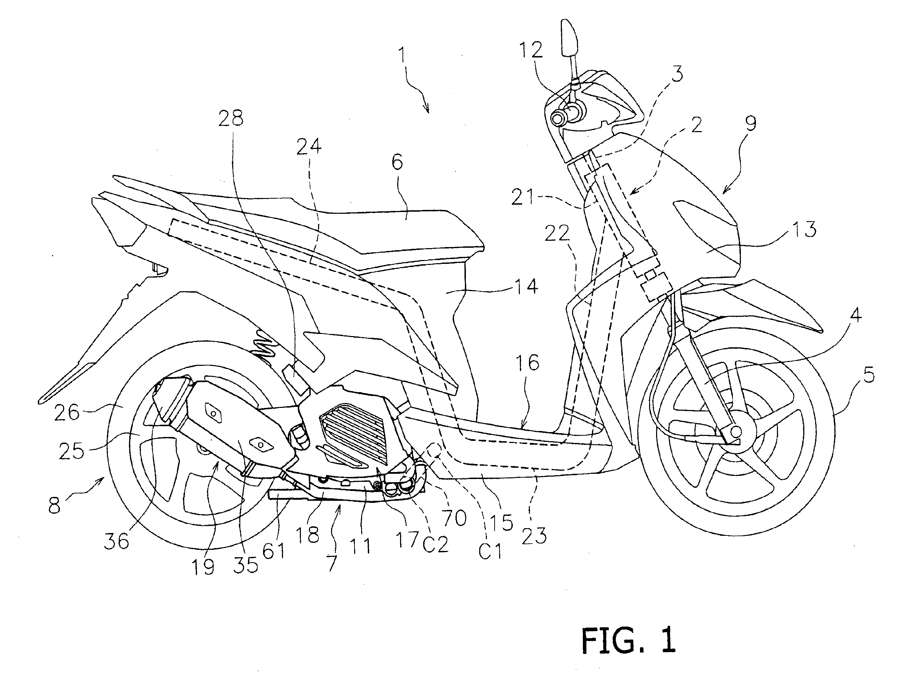

A saddle-ride type vehicle according to an exemplary embodiment will be hereinafter explained with reference to the drawings. FIG. 1 is a side view of a saddle-ride type vehicle 1 according to the present exemplary embodiment. The saddle-ride type vehicle 1 is a scooter-type motorcycle. The saddle-ride type vehicle 1 includes a vehicle body frame 2, a steering shaft 3, a front fork 4, a front wheel 5, a seat 6, an engine unit 7, a rear wheel 8 and a vehicle body cover 9. It should be noted in the present exemplary embodiment that the "a back-and-forth direction" refers to a vehicle longitudinal direction seen from a rider seated on the seat 6 unless otherwise particularly explained. "A right-and-left direction" refers to a vehicle transverse direction seen from a rider seated on the seat 6. "A front view" and "a side view" respectively refer to a vehicle front view and a vehicle side view.

The vehicle body frame 2 is formed by pipes made of iron. The vehicle body frame 2 includes a head pipe portion 21, a down frame portion 22, an under frame portion 23 and a rear frame portion 24. It should be noted that the vehicle body frame 2 may be integrally formed by means of, for instance, bending, or alternatively, may be formed by integrating a plurality of components by means of, for instance, welding. The head pipe portion 21 is positioned in the vehicle center in the vehicle transverse direction. The steering shaft 3 is rotatably inserted into the head pipe portion 21. A handle portion 12 is coupled to the upper portion of the steering shaft 3. The front fork 4 is coupled to the lower portion of the steering shaft 3. The front fork 4 supports the front wheel 5 in a rotatable state.

The down frame portion 22 is connected to the head pipe portion 21. The down frame portion 22 is downwardly extended from the head pipe portion 21. The under frame portion 23 is connected to the bottom end of the down frame portion 22. The under frame portion 23 is backwardly extended from the down frame portion 22. The rear frame portion 24 is connected to the rear end of the under frame portion 23. The rear frame portion 24 is extended obliquely rearwards and upwards from the rear end of the under frame portion 23. The seat 6 is disposed over the rear frame portion 24. The seat 6 is positioned rearwards of the head pipe portion 21. The seat 6 is supported by the vehicle body frame 2.

The vehicle body cover 9 includes a front portion cover 13, a rear portion cover 14 and an under over 15. The front portion cover 13 mainly covers the surrounding of the head pipe portion 21 and the down frame portion 22. The rear portion cover 14 is positioned under the seat 6. The rear portion cover 14 covers the front side and the both lateral sides of the rear frame portion 24. The under cover 15 is positioned between the front portion cover 13 and the rear portion cover 14 in the back-and-forth direction. The under cover 15 couples the front portion cover 13 and the rear portion cover 14. The under cover 15 includes a footboard 16.

The footboard 16 is positioned between the front wheel 5 and the seat 6 in the back-and-forth direction. The footboard 16 is disposed forwards of and lower than the seat 6. The footboard 16 is disposed in front of the engine unit 7. The footboard 16 is a surface on which a rider seated on the seat 6 puts his/her feet during travelling. The footboard 16 is positioned over the under frame portion 23. The footboard 16 is positioned between the down frame portion 22 and the rear frame portion 24 in the back-and-forth direction. The footboard 16 has an entirely flat shape in the vehicle transverse direction. The expression "the footboard 16 is flat" herein means that the footboard 16 is flat to the extent of allowing a rider to put his/her feet on any portion thereof. In other words, a convexo-concave may be formed on the footboard 16 for an antiskid purpose or etc.

The engine unit 7 is disposed under the seat 6. The engine unit 7 is supported by the vehicle body frame 2. The engine unit 7 is pivotably attached to the vehicle body frame 2 through a link mechanism 70. As illustrated in FIG. 1, the engine unit 7 and the link mechanism 70 are specifically configured to pivot about a pivot center C1 with respect to the vehicle body frame 2. Further, the engine unit 7 is configured to pivot about a pivot center C2 with respect to the link mechanism 70. The engine unit 7 supports the rear wheel 8 in a rotatable state. The engine unit 7 and the rear wheel 8 form a unit swing structure that is pivotable with respect to the vehicle body frame 2. The engine unit 7 includes an engine 11, a radiator 17, an outer exhaust pipe 18 and a muffler 19.

The engine 11 is pivotably attached to the vehicle body frame 2. The engine 11 is embedded with, for instance, an electric controlled fuel injection. The radiator 17 is disposed laterally to the engine 11. The outer exhaust pipe 18 is connected to the engine 11, while being backwardly extended from the engine 11. The muffler 19 is disposed rearwards of the radiator 17. The muffler 19 is connected to the outer exhaust pipe 18, while being supported by the engine 11. The muffler 19 is disposed laterally to the rear wheel 8. The rear wheel 8 is disposed behind the engine 11. The rear wheel 8 includes a rim 25 and a tire 26 attached to the rim 25.

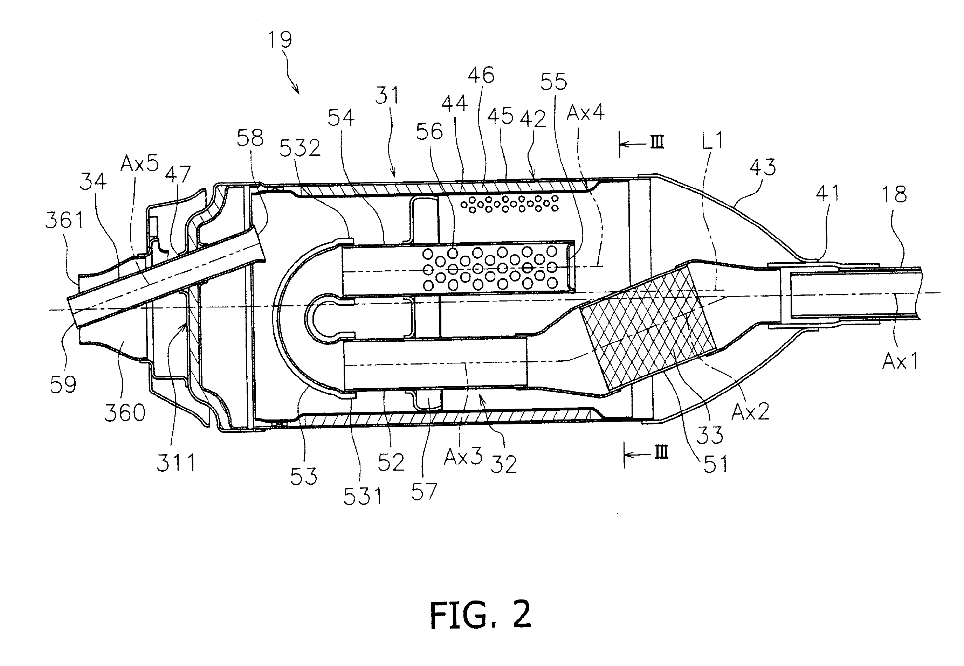

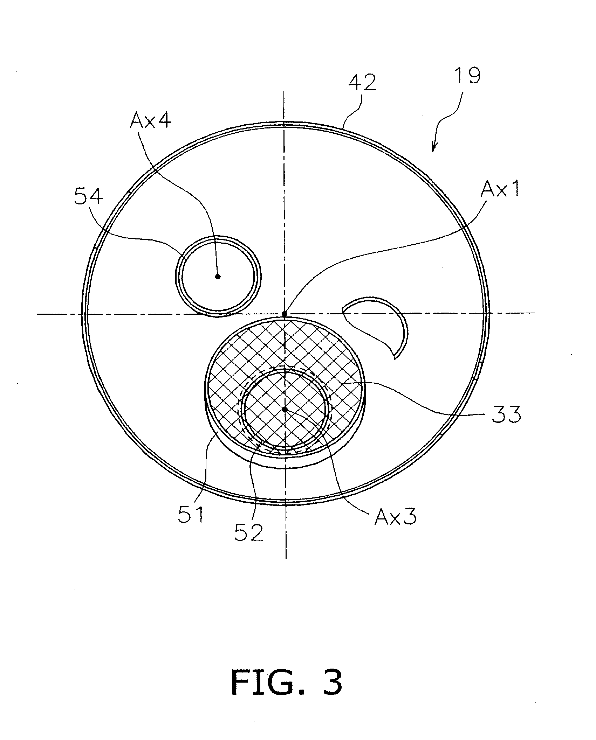

Next, the structure of the muffler 19 will be explained in detail. FIG 2 is a cross-sectional view of the muffler 19. FIG. 3 is a cross-sectional view of FIG 2 sectioned along a line III-III. It should be noted that FIG. 2 is a development plan view of components in the inside of the muffler 19, and therefore, does not illustrate a cross-section sectioned along a single plane. The muffler 19 includes an outer pipe 31, an inner exhaust pipe 32, a catalyst 33 and an outlet pipe 34. As illustrated in FIG. 1, the muffler 19 further includes a first muffler cover 35 and a second muffler cover 36. The first and second muffler covers 35 and 36 are made of resin. The first muffler cover 35 is attached to the outer peripheral surface of the outer pipe 31. The second muffler cover 36 is attached to a rear surface 311 of the outer pipe 31. It should be noted that FIGS. 2 and 3 omit illustration of the first and second muffler covers 35 and 36.

The outer pipe 31 accommodates the inner exhaust pipe 32. The outer pipe 31 includes a first opening portion 41, a main body pipe portion 42 and a circular cone portion 43. The first opening portion 41 is formed in the front end portion of the outer pipe 31. The first opening portion 41 receives an upstream side end portion of the inner exhaust pipe 32 connected thereto. Further, the first opening portion 41 receives a downstream side end portion of the outer exhaust pipe 18 connected thereto. The outer exhaust pipe 18 connects the engine 11 and the first opening portion 41. The inner exhaust pipe 32 is connected to the outer exhaust pipe 18 through the first opening portion 41. It should be noted in the explanation of FIGS. 2 and 3 of the present exemplary embodiment that a rightward direction in FIG. 2, i.e., a direction towards the first opening portion 41 from the inside of the main body pipe portion 42 along the center axis of the muffler 19 (i.e., a center axis Ax1 of the main body pipe portion 42) is defined as "a forward direction" whereas a leftward direction in FIG 2, i.e., a direction opposite to the forward direction is defined as "a rearward direction". It should be also noted in the explanation of FIGS. 2 and 3 of the present exemplary embodiment that upward and downward directions respectively mean directions arranged where the center axis Ax1 of the main body pipe portion 42 is horizontally arranged.

The main body pipe portion 42 has a cylindrical shape. The main body pipe portion 42 is extended in a predetermined first direction (along the center axis Ax1 of the main body pipe portion 42). In the present exemplary embodiment, the first direction is a synonym of the rearward direction. Therefore, the main body pipe portion 42 is extended rearwards. The main body pipe portion 42 includes an inner pipe portion 44 and an outer pipe portion 45. The inner pipe portion 44 is disposed inside the outer pipe portion 45. A heat insulator 46 is disposed between the inner pipe portion 44 and the outer pipe portion 45.

The circular cone portion 43 has a shape with a diameter increased downstream. In other words, the circular cone portion 43 has a shape with a backwardly increased diameter. The circular cone portion 43 has a shape with the diameter reduced towards the first opening portion 41. The circular cone portion 43 is disposed between the first opening portion 41 and the main body pipe portion 42. The circular cone portion 43 and the first opening portion 41 are disposed concentrically to each other. The main body pipe portion 42 is disposed concentrically to the circular cone portion 43 and the first opening portion 41 (and concentrically to the center axis Ax1 of the main body pipe portion 42).

The outer pipe 31 further includes a second opening portion 47. The second opening portion 47 is disposed backwardly away from the first opening portion 41. The second opening portion 47 is positioned higher than the center axis Ax1 of the main body pipe portion 42. The second opening portion 47 is formed in the rear surface 311 of the outer pipe 31.

The inner exhaust pipe 32 accommodates the catalyst 33. The catalyst 33 is of a three-way catalyst type using, for instance, platinum, palladium and rhodium. To reliably produce a large exhaust path length, the inner exhaust pipe 32 has a shape bent at a plurality of positions. Specifically, the inner exhaust pipe 32 includes a first pipe portion 51, a second pipe portion 52, a third pipe portion 53 and a fourth pipe portion 54.

The first pipe portion 51 accommodates the catalyst 33. The first pipe portion 51 is connected to the first opening portion 41. The first pipe portion 51 is extended from the first opening portion 41 in a second direction. The second direction is slanted with respect to the first direction. The second direction is slanted with respect to the center axis of the first opening portion 41. Therefore, a center axis Ax2 of the first pipe portion 51 is slanted with respect to the center axis Ax1 of the main body pipe portion 42. Specifically, the center axis Ax2 of the first pipe portion 51 is extended rearwards and obliquely downwards. The outer diameter of the first pipe portion 51 is greater than that of the second pipe portion 52. Further, the inner diameter of the first pipe portion 51 is greater than that of the first opening portion 41. The first pipe portion 51 is partially disposed inside the circular cone portion 43. Specifically, the front portion of the first pipe portion 51 is disposed inside the circular cone portion 43. The rear portion of the first pipe portion 51 is disposed inside the main body pipe portion 42. An extension of the center axis of the first opening portion 41 is overlapped with the catalyst 33. In other words, the center axis Ax1 of the main body pipe portion 42 is overlapped with the catalyst 33. The center axis Ax2 of the first pipe portion 51 intersects the center axis Ax1 of the main body pipe portion 42. According to the embodiment, said intersection is upstream of the catalyst 33.

The second pipe portion 52 is connected to the first pipe portion 51. The second pipe portion 52 is backwardly extended from the rear end portion of the first pipe portion 51. A center axis Ax3 of the second pipe portion 52 is arranged in parallel to the center axis Ax1 of the main body pipe portion 42. The center axis Ax3 of the second pipe portion 52 is disposed lower than the center axis Ax1 of the main body pipe portion 42. The second pipe portion 52 is entirely disposed lower than the center axis Ax1 of the main body pipe portion 42. The second pipe portion 52 is disposed inside the main body pipe portion 42. The center axis Ax3 of the second pipe portion 52 intersects the center axis Ax2 of the first pipe portion 51. According to the embodiment, said intersection is downstream of the catalyst 33. Moreover, the center axis Ax1 of the main body pipe portion 42, center axis Ax2 of the first pipe portion 51 and center axis Ax3 of the second pipe portion 52 are in a common vertical plane.

The third pipe portion 53 is connected to the second pipe portion 52. The third pipe portion 53 has a shape bent in a U-shape towards the first opening portion 41 from the second pipe portion 52. The third pipe portion 53 includes an upstream side end portion 531 and a downstream side end portion 532. The upstream side end portion 531 is connected to the rear end portion of the second pipe portion 52. The downstream side end portion 532 is connected to the rear end portion of the fourth pipe portion 54. The third pipe portion 53 is disposed inside the main body pipe portion 42.

The fourth pipe portion 54 is connected to the third pipe portion 53. The fourth pipe portion 54 is forwardly extended from the third pipe portion 53. A center axis Ax4 of the fourth pipe portion 54 is arranged in parallel to the center axis Ax1 of the main body pipe portion 42. The center axis Ax4 of the fourth pipe portion 54 is positioned higher than the center axis Ax1 of the main body pipe portion 42. The fourth pipe portion 54 is disposed higher than the second pipe portion 52. The fourth pipe portion 54 is disposed inside the main body pipe portion 42. As illustrated in FIG 3, the fourth pipe portion 54 is positioned laterally to the vertical plane containing the center axis Ax1 of the main body pipe portion 42. The tip of the fourth pipe portion 54 is not overlapped with the catalyst 33 seen in a direction perpendicular to the first direction. The front end of the fourth pipe portion 54 is further rearward then a rear end of the catalyst 33 with regard to the center axis Ax1 of the main body pipe portion 42. In other words, the front end of the fourth pipe portion 54 is not overlapped with the catalyst 33 seen from the top side. Further, in other words, the front end of the fourth pipe portion 54 is positioned rearwards of the rear end of the catalyst 33.

In a side view of the muffler 19, a conceptual extended line L1 forwardly extended from the (front end of the) fourth pipe portion 54 intersects with the catalyst 33. Specifically, the conceptual extended line L1 of the bottom portion of the fourth pipe portion 54 intersects with the catalyst 33. The tip of the fourth pipe portion 54 is plugged with a plug portion 55. Further, the lateral surface of the fourth pipe portion 54 includes apertures 56. It should be noted in FIG. 2 that the reference numeral 56 is assigned to only one of the plural apertures. Within the main body pipe portion 42, the second pipe portion 52 and the fourth pipe portion 54 are supported by a support member 57.

The outlet pipe 34 is inserted into the second opening portion 47. The outlet pipe 34 includes a first end portion 58 and a second end portion 59. The first end portion 58 is disposed inside the outer pipe 31. The first end portion 58 is disposed rearwards of the fourth pipe portion 54. The first end portion 58 is disposed rearwards of the third pipe portion 53. The first end portion 58 is positioned higher than the center axis Ax1 of the main body pipe portion 42. The first end portion 58 has a shape with a diameter increased upstream. A center axis Ax5 of the outlet pipe 34 is slanted with respect to the center axis Ax1 of the main body pipe portion 42. Specifically, the center axis Ax5 of the outlet pipe 34 is extended rearwards and obliquely downwards. The outlet pipe 34 is disposed for passing through the inside of the second muffler cover 36. An inner cover 360 is disposed within the second muffler cover 36. The outlet pipe 34 is disposed for passing through the inside of the inner cover 360. The second end portion 59 is backwardly protruded from an opening 361 of the inner cover 360. The second end portion 59 is disposed for overlapping with the center axis Ax1 of the main body pipe portion 42. Hence, center axis Ax1 of the main body pipe portion 42 and the first opening extends through the opening of the second end portion 59.

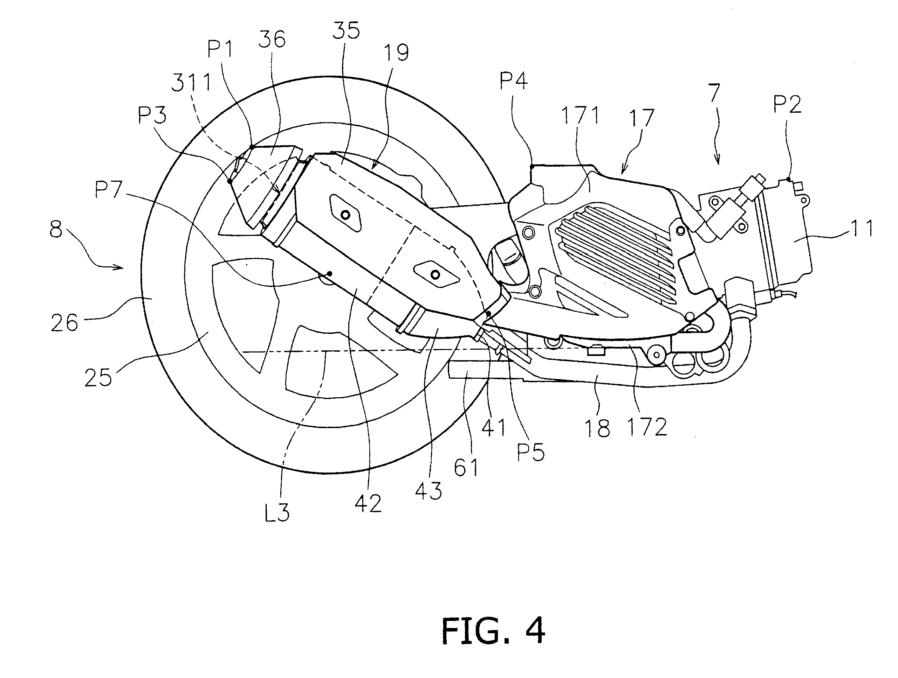

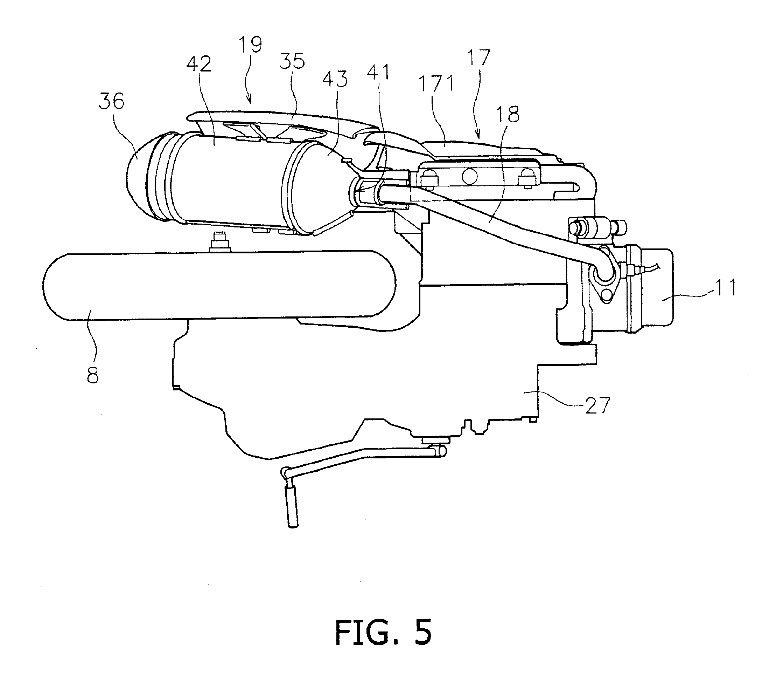

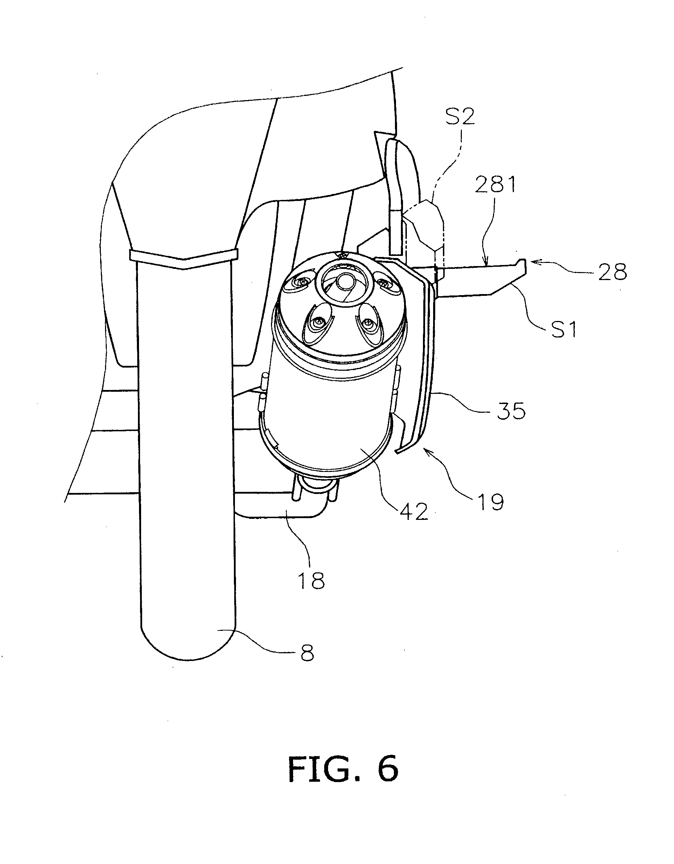

Next, the arrangement of the muffler 19 in the saddle-ride type vehicle 1 will be explained. FIG. 4 is a side view of a portion of the saddle-ride type vehicle 1. FIG. 5 is a plan view of a portion of the saddle-ride type vehicle 1 seen from the bottom side. FIG. 6 is a rear view of a portion of the saddle-ride type vehicle 1. As illustrated in FIG 4, the saddle-ride type vehicle 1 further includes a foldable type vehicle stand 61. The vehicle stand 61 is disposed while the posture thereof can be changed between a deployed state and a retracted state. In the retracted state, the vehicle stand 61 is positioned higher than the bottom portion of the rear wheel 8. The vehicle stand 61 is disposed under the engine 11. The aforementioned radiator 17 is disposed over the vehicle stand 61. It should be noted in FIG. 4 that the vehicle stand 61 is set to be in the retracted state. In other words, FIG. 4 illustrates a posture of the engine unit 7 where the vehicle stand 61 is set to be in the retracted state.

As illustrated in FIG 4, a top end P1 of the muffler 19 is positioned higher than a top end P2 of the engine 11 in a vehicle side view. A rear end P3 of the muffler 19 is positioned higher than the top end P2 of the engine 11. The top end P2 of the engine 11 herein means the top ends of engine-related cases including a crankcase, a cylinder block, a cylinder head, a cylinder cover and etc. Subordinate devices attached to the cases are not herein considered as the top end P2.

As illustrated in FIG 4, the radiator 17 includes a radiator cover 171 and a radiator main body 172. In a vehicle side view, the top end P1 of the muffler 19 is positioned higher than a top end P4 of the radiator cover 171. In a vehicle side view, the rear end P3 of the muffler 19 is overlapped with the rear wheel 8. In a vehicle side view, the top end P1 of the muffler 19 is overlapped with the rear wheel 8. A front end P5 of the muffler 19 is positioned higher than a conceptual extended line L3 of the bottom surface of the radiator main body 172.

As illustrated in FIG 5, the muffler 19 is disposed rearwards of the radiator 17 in a plan view. In a plan view, the muffler 19 is partially disposed inwards of the radiator 17 in the vehicle transverse direction. Specifically, the inner lateral end of the main body pipe portion 42 is disposed inwards of the radiator 17 in the vehicle transverse direction. It should be noted that a transmission 27 is disposed laterally to the engine 11.

As illustrated in FIGS. 1 and 6, the saddle-ride type vehicle 1 includes a foldable tandem footrest 28. As illustrated in FIG. 6, the tandem footrest 28 is disposed while the posture thereof can be changed between a deployed state S1 and a retracted state S2. The tandem footrest 28 is positioned outwards of the radiator 17 in the vehicle transverse direction. The tandem footrest 28 includes a footrest surface 281 on the top surface thereof for allowing a tandem rider to put his/her foot thereon. When the tandem footrest 28 is set to be in the deployed state S1, the outer lateral end of the muffler 19 is positioned inwards of the inner lateral end of the footrest surface 281 of the tandem footrest 28 in the vehicle transverse direction. Specifically, when the tandem footrest 28 is set to be in the deployed state S1, the outer lateral end of the main body pipe portion 42 is positioned inwards of the inner lateral end of the footrest surface 281 of the tandem footrest 28 in vehicle the transverse direction. When the tandem footrest 28 is set to be in the deployed state S1, the outer lateral end of the first muffler cover 35 is positioned inwards of the inner lateral end of the footrest surface 281 of the tandem footrest 28 in the vehicle transverse direction.

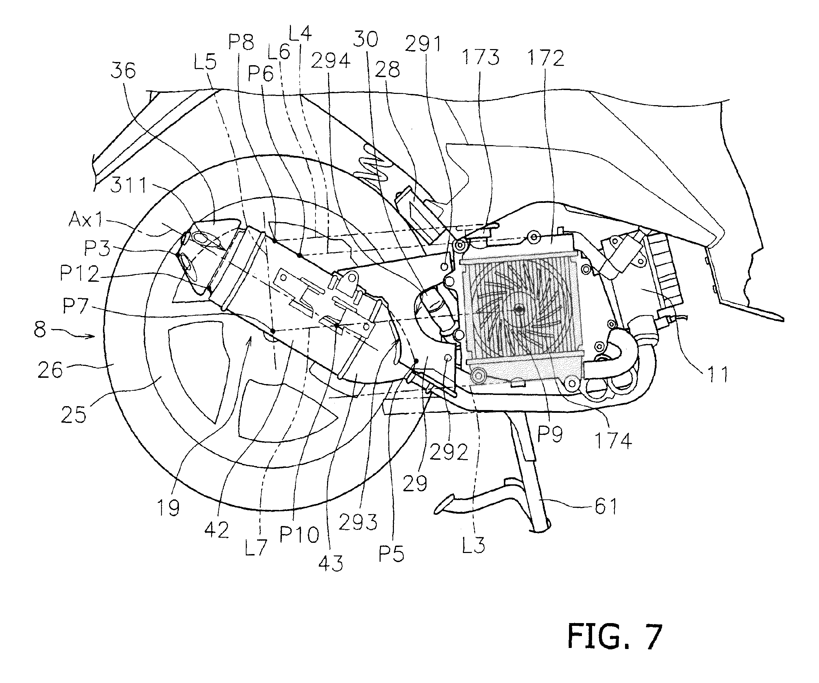

FIG. 7 is a side view of a portion of the saddle-ride type vehicle 1 where the vehicle stand 61 is set to be in the deployed state. In the deployed state, the bottom end of the vehicle stand 61 is positioned lower than the bottom of the rear wheel 8. In the deployed state, the vehicle stand 61 supports the saddle-ride type vehicle 1. It should be noted that FIG 7 omits illustration of the radiator cover 171 and the first muffler cover 35 for easy understanding. As illustrated in FIG 7, the radiator 17 includes a radiator cap 173 and a radiator fan 174. The radiator cap 173 is attached to the top surface of the radiator main body 172. The radiator fan 174 is disposed laterally to the radiator main body 172.

As illustrated in FIG. 7, the engine unit 7 further includes a bracket 29. The bracket 29 is attached to the engine 11. Specifically, the bracket 29 includes a first fixation portion 291 and a second fixation portion 292. The first and second fixation portions 291 and 292 are formed in the front end portions of the bracket 29. The bracket 29 is fixed at the first and second fixation portions 291 and 292 to the engine 11. Further, a rear edge portion 293 of the bracket 29 is fixed to the muffler 19. the rear edge portion 293 of the bracket 29 is welded to the circular cone portion 43 and the main body pipe portion 42 of the muffler 19. Accordingly, the muffler 19 is supported by the bracket 29 in a cantilevered state. In other words, the bracket 29 supports one end of the muffler 19 without supporting the other end of the muffler 19. Further, the bracket 29 includes a recessed portion 294. The recessed portion 294 is disposed between the first fixation portion 291 and the second fixation portion 292. An oil level gauge 30 is attached to the engine 11 while being allowed to be accessed through the recessed portion 294. The oil level gauge 30 is a member for checking the oil level of the engine 11. The oil level gauge 30 is disposed rearwards of the radiator 17.

The center axis Ax1 of the main body pipe portion 42 is extended rearwards and obliquely upwards. In a vehicle side view, an intersection P6 between the muffler 19 and a conceptual extended line L4 of the top surface of the radiator main body 172 is positioned forwards of a conceptual vertical line L5. The conceptual vertical line L5 is a conceptual line that is arranged perpendicularly to the conceptual extended line L4 while passing through a rotary center P7 of the rear wheel 8. In a vehicle side view, an intersection P8 between the muffler 19 and a conceptual extended line L6 of the top surface of the radiator cap 173 is positioned forwards of the conceptual vertical line L5. In a vehicle side view, an intersection P10 between a conceptual line L7 and the center axis Ax1 of the main body pipe portion 42 is positioned forwards of the rotary center P7 of the rear wheel 8. The conceptual line L7 is a conceptual line connecting a rotary center P9 of the radiator fan 174 and the rotary center P7 of the rear wheel 8.

In FIG. 7, the rear end P3 of the muffler 19 is also overlapped with the rear wheel 8 in a vehicle side view. The rear end P3 of the muffler 19 is positioned rearwards of the conceptual vertical line L5 while being positioned higher than a conceptual parallel line (corresponding to the conceptual line L7 in the present exemplary embodiment) that is arranged in parallel to the conceptual extended line L4 while passing through the rotary center P7 of the rear wheel 8. It should be noted that the rear end P3 of the muffler 19 means the rear end of the second muffler cover 36. Further in a vehicle side view, a rear end P12 of the outer pipe 31 is positioned radially inside the inner peripheral surface of the wheel 25. The rear surface 311 of the outer pipe 31 is entirely positioned radially inside the inner peripheral surface of the wheel 25.

The front end P5 of the muffler 19 is positioned higher than the bottom end of the radiator 17. In a vehicle side view, the front end P5 of the muffler 19 is disposed under the oil level gauge 30. The front end P5 of the muffler 19 is positioned higher than the conceptual extended line L3 of the bottom surface of the radiator main body 172. In a vehicle side view, the circular cone portion 43 is positioned rearwards of the oil level gauge 30. In a vehicle side view, the circular cone portion 43 is disposed over the vehicle stand 61 set to be in a folded state, i.e., the retracted state.

In the muffler 19 according to the present embodiment, the center axis Ax2 of the first pipe portion 51 is arranged for slanting with respect to the first direction. In other words, the center axis Ax2 of the first pipe portion 51 is arranged for slanting with respect to the center axis Ax1 of the main body pipe portion 42. Therefore, it is possible to reliably produce a long path length of the inner exhaust pipe 32 and simultaneously to inhibit increase in length of the muffler 19.

The outer diameter of the first pipe portion 51 is greater than the outer diameter of the second pipe portion 52. Therefore, the first pipe portion 51 can accommodate the catalyst 33 with a large size. Further, the tip of the fourth pipe portion 54 is not overlapped with the catalyst 33 seen in a direction perpendicular to the first direction. Therefore, the fourth pipe portion 54 can be disposed adjacently to the second pipe portion 52 even when the first pipe portion 51 has a diameter greater than that of the second pipe portion 52. The inner exhaust pipe 32 can be thereby compactly disposed within the outer pipe 31.

In a side view, the conceptual extended line L1, extended from the fourth pipe portion 54 in a direction parallel to the first direction, intersects with the catalyst 33. In other words, the fourth pipe portion 54 is disposed adjacently to the first pipe portion 51. Therefore, the inner exhaust pipe 32 can be compactly disposed within the outer pipe 31.

The fourth pipe portion 54 includes a closed end and also includes the apertures 56 on the lateral surface thereof. Therefore, exhaust gas is blown out of the apertures 56 on the lateral surface of the fourth pipe portion 54. Accordingly, the high-temperature exhaust gas can be inhibited from being directly blown against the catalyst 33.

The front portion of the first pipe portion 51 is disposed within the circular cone portion 43. Therefore, the inner exhaust pipe 32 can be compactly disposed within the outer pipe 31 by disposing the first pipe portion 51, which is disposed with a slanted posture, along the slope of the circular cone portion 43.

The circular cone portion 43 and the first opening portion 41 are disposed concentrically to each other. Further, the main body pipe portion 42 is disposed concentrically to the circular cone portion 43 and the first opening portion 41. Therefore, the inner exhaust pipe 32 can be compactly disposed within the outer pipe 31 even when the first pipe portion 51 is disposed with a slant posture.

The center axis Ax2 of the first pipe portion 51 is slanted with respect to the first direction. The exhaust gas thereby obliquely flows into the catalyst 33 within the first pipe portion 51 through the first opening portion 41. Therefore, the exhaust gas passes through a wide range of the catalyst 33 compared to the case that exhaust gas flows straight into the catalyst 33. Accordingly, the catalyst 33 can be enhanced in its efficiency.

The extended line of the center axis of the first opening portion 41 is overlapped with the catalyst 33. Therefore, the exhaust gas, flown into the first pipe portion 51 through the first opening portion 41, easily hits the catalyst 33. Accordingly, the catalyst 33 can be enhanced in its efficiency.

The end of the outlet pipe 34 has a shape with a diameter increased upstream. Such shape of the end of the outlet pipe 34 can reduce noise.

In the saddle-ride type vehicle 1 according to the present exemplary embodiment, the outer lateral end of the muffler 19 is positioned inwards of the inner lateral end of the footrest surface 281 of the tandem footrest 28 in the vehicle transverse direction. Therefore, the engine unit 7 can be reduced in its size in the vehicle transverse direction.

The rear end P3 of the muffler 19 is overlapped with the rear wheel 8 in a vehicle side view. Therefore, the engine unit 7 can be reduced in its size.

The rear end P12 of the outer pipe 31 of the muffler 19 is positioned radially inwards of the inner peripheral surface of the rim 25. Therefore, the engine unit 7 can be reduced in its size.

The bracket 29 supports the muffler 19 in a cantilevered state. Therefore, the number of members for supporting the muffler 19 can be reduced compared to the case that the both ends of the muffler 19 are supported. Further, the muffler 19 is shortly inhibited in its length. Therefore, the bracket 29 can support the muffler 19 with sufficient strength even in the cantilevered state.

An exemplary embodiment of the present teaching has been described above. However, the present teaching is not limited to the aforementioned exemplary embodiment, and a variety of changes can be herein made without departing from the scope of the present teaching.

The saddle-ride type vehicle 1 includes a motorcycle, an all-terrain vehicle and a snowmobile. Further, the motorcycle includes a scooter and a moped.

The inner structure of the muffler 19 may be changed from that described in the aforementioned exemplary embodiment. For example, the first direction is not necessarily a direction arranged in parallel to the center axis Ax1 of the main body pipe portion 42, and may be a direction slanted with respect to the center axis Ax1 of the main body pipe portion 42. The first pipe portion 51 may be disposed not only partially but also entirely within the circular cone portion 43. The circular cone portion 43 and the first opening portion 41 may be displaced away from the concentric positions thereof. The main body pipe portion 42 may be displaced away from its concentric position to the circular cone portion 43 and the first opening portion 41. The extended line of the center axis of the first opening portion 41 may be arranged away from the catalyst 33. Further, the arrangement of the muffler 19 in the saddle-ride type vehicle 1 is not limited to that of the aforementioned exemplary embodiment.

### Industrial Applicability

According to the present teaching, it is possible to reliably produce a long path length of an exhaust pipe disposed inside a muffler and simultaneously to inhibit increase in length of the muffler.

### Reference Signs List

- 1: Saddle-ride type vehicle
- 2: Vehicle body frame
- 7: Engine unit
- 8: Rear wheel
- 11: Engine
- 17: Radiator
- 18: Outer exhaust pipe
- 19: Muffler
- 25: Rim
- 26: Tire
- 28: Tandem footrest
- 29: Bracket
- 31: Outer pipe
- 32: Inner exhaust pipe
- 33: Catalyst
- 34: Outlet pipe
- 41: First opening portion
- 42: Main body pipe portion
- 43: Circular cone portion
- 47: Second opening portion
- 51: First pipe portion
- 52: Second pipe portion
- 53: Third pipe portion
- 54: Fourth pipe portion

## Claims

1. A muffler for a saddle-ride type vehicle, comprising:
a catalyst (33);
an inner exhaust pipe (32) accommodating the catalyst (33); and
an outer pipe (31) accommodating the inner exhaust pipe (32), the outer pipe (31) including: a first opening portion (41) to which an upstream side end portion of the inner exhaust pipe (32) is connected; and a main body pipe portion (42) extended in a predetermined first direction along a center axis (Ax1) of the main body pipe portion (42); wherein the inner exhaust pipe (32) includes:
a first pipe portion (51) accommodating the catalyst (33), the first pipe portion (51) extended from the first opening portion (41) in a second direction slanted with respect to the first direction;
a second pipe portion (52) extended from the first pipe portion (51) in a direction parallel to the first direction;
a third pipe portion (53) having a shape bent in a U-shape from the second pipe portion (52) towards the first opening portion (41); and
a fourth pipe portion (54) extended from the third pipe portion (53) in a direction parallel to the first direction, **characterized in that**
a center axis (Ax2) of the first pipe portion (51) is slanted with respect to the center axis (Ax1) of the main body pipe portion (42).

2. A muffler according to claim 1, **characterized in that** a tip of the fourth pipe portion (54) is not overlapped with the catalyst (33) seen in a direction perpendicular to the first direction.

3. A muffler according to claim 1 or 2, **characterized in that** an outer diameter of the first pipe portion (51) is greater than an outer diameter of the second pipe portion (52).

4. A muffler according to one of claims 1 to 3, **characterized in that** a conceptual line extended from the fourth pipe portion (54) in the direction parallel to the first direction intersects with the catalyst (33) in a side view of the muffler (19).

5. A muffler according to one of claims 1 to 4, **characterized in that** the fourth pipe portion (54) includes a closed tip, and the fourth pipe portion (54) includes an aperture on a lateral surface thereof, the aperture communicated with an inside of the fourth pipe portion (54).

6. A muffler according to one of claims 1 to 5, **characterized in that** the outer pipe (31) includes a circular cone portion (43) having a shape with a diameter increased downstream,
the circular cone portion (43) is disposed between the first opening portion (41) and the main body pipe portion (42), and
the first pipe portion (51) is at least partially disposed inside the circular cone portion (43).

7. A muffler according to claim 6, **characterized in that** the circular cone portion (43) and the first opening portion (41) are concentrically disposed.

8. A muffler according to claim 7, **characterized in that** the main body pipe portion (42) is disposed concentrically to the circular cone portion (43) and the first opening portion (41).

9. A muffler according to one of claims 1 to 8, **characterized in that** the second direction is slanted with respect to a center axis (Ax1) of the first opening portion (41).

10. A muffler according to claim 9, **characterized in that** an extended line of the center axis (Ax1) of the first opening portion (41) is overlapped with the catalyst (33).

11. A muffler according to one of claims 1 to 10, **characterized by**:
an outlet pipe (34), wherein the outer pipe (31) further includes a second opening portion (47) disposed away from the first opening portion (41) in the first direction,
the outlet pipe (34) includes an end portion (58) disposed inside the outer pipe (31) and is inserted into the second opening portion (47), and
the end portion (58) of the outlet pipe (34) has a shape with a diameter increased upstream.

12. A saddle-ride type vehicle, comprising:
a vehicle body frame; and
an engine unit (7) pivotably attached to the vehicle body frame, the engine unit (7) including: an engine (11); an outer exhaust pipe (18) connecting the engine (11) and the first opening portion (41); and a muffler (19) according to one of claims 1 to 11.

13. A saddle-ride type vehicle according to claim 12, further comprising:
a tandem footrest (28) of a foldable type, wherein the engine unit (7) further includes a radiator (17) disposed laterally to the engine (11),
the tandem footrest (28) is disposed outwards of the radiator (17) in a vehicle transverse direction, and
an outer lateral end of the muffler (19) is positioned inwards of an inner lateral end of a footrest surface of the tandem footrest (28) in the vehicle transverse direction when the tandem footrest (28) is set to be in a deployed state (S1).

14. A saddle-ride type vehicle according to one of claims 12 and 13, further comprising:
a rear wheel (8) rotatably supported by the engine unit (7), wherein a rear end portion of the muffler (19) is overlapped with the rear wheel (8) in a vehicle side view.

15. A saddle-ride type vehicle according to one of claims 12 to 14, wherein the rear wheel (8) includes a rim (25) and a tire (26) attached to the rim (25), and
a rear end portion of the outer pipe (31) of the muffler (19) is positioned radially inwards of an inner peripheral surface of the rim (25).

16. A saddle-ride type vehicle according to one of claims 12 to 15, wherein the engine unit (7) further includes a bracket (29) attached to the engine (11), the bracket (29) supporting the muffler (19) in a cantilevered state.

## Patentansprüche

1. Ein Schalldämpfer für ein Sattel-Reit-Typ-Fahrzeug mit:
einem Katalysator (33);
einer inneren Abgasleitung (32), die den Katalysator (33) aufnimmt; und
eine äußere Leitung (31), welche die innere Abgasleitung (32) aufnimmt, die äußere Leitung (31) beinhaltet: einen ersten Öffnungsabschnitt (41), zudem ein Strom-Auf-Seiten-End-Abschnitt der inneren Abgasleitung (32) verbunden ist; und einen Haupt-Körper-Leitungs-Abschnitt (42), der sich in eine vorgegebene erste Richtung entlang einer Mittenachse (Ax1) des Haupt-Körper-Leitungs-Abschnitts (42) erstreckt; wobei die innere Abgasleitung (32) beinhaltet:
einen ersten Leitungsabschnitt (51), der den Katalysator (33) aufnimmt, der erste Leitungsabschnitt (51) erstreckt sich von dem ersten Öffnungsabschnitt (41) in eine zweite Richtung, geneigt mit Bezug auf die erste Richtung;
einen zweiten Leitungsabschnitt (52), der sich von dem ersten Leitungsabschnitt (51) in eine Richtung parallel zu der ersten Richtung erstreckt;
einen dritten Leitungsabschnitt (53), der eine Form, gebogen in eine U-Form von dem zweiten Leitungsabschnitt (52) zu dem ersten Öffnungsabschnitt (41) hat; und
einen vierten Leitungsabschnitt (54), der sich von dem dritten Leitungsabschnitt (53) in eine Richtung parallel zu der ersten Richtung erstreckt, **dadurch gekennzeichnet, dass** eine Mittenachse (Ax2) des ersten Leitungsabschnitts (51) geneigt ist mit Bezug zu der Mittenachse (Ax1) des Haupt-Körper-Leitungs-Abschnitts (42).

2. Ein Schalldämpfer gemäß Anspruch 1, **dadurch gekennzeichnet, dass** eine Spitze des vierten Leitungsabschnitts (54) nicht mit dem Katalysator (33) überlappt, gesehen in eine Richtung senkrecht zu der ersten Richtung.

3. Ein Schalldämpfer gemäß Anspruch 1 oder 2, **dadurch gekennzeichnet, dass** ein äußerer Durchmesser des ersten Leitungsabschnitts (51) größer als ein äußerer Durchmesser des zweiten Leitungsabschnitts (52).

4. Ein Schalldämpfer gemäß einem der Ansprüche 1 bis 3, **dadurch gekennzeichnet, dass** eine konzeptionelle Linie, die sich von dem vierten Leitungsabschnitt (54) in die Richtung parallel zu der ersten Richtung erstreckt, sich mit dem Katalysator (33) in einer Seitenansicht des Schalldämpfers (19) überschneidet.

5. Ein Schalldämpfer gemäß einem der Ansprüche 1 bis 4, **dadurch gekennzeichnet, dass** der vierte Leitungsabschnitt (54) eine geschlossene Spitze beinhaltet, und der vierte Leitungsabschnitt (54) beinhaltet eine Ausnehmung an einer Querfläche desselben, die Ausnehmung kommuniziert mit einer Innenseite des vierten Leitungsabschnitts (54).

6. Ein Schalldämpfer gemäß einem der Ansprüche 1 bis 5, **dadurch gekennzeichnet, dass** die äußere Leitung (31) einen Kreis-Kegel-Abschnitt (43) beinhaltet, der eine Form hat, mit einem Durchmesser, der sich nach strom-ab vergrößert,
der Kreis-Kegel-Abschnitt (43) ist zwischen dem ersten Öffnungsabschnitt (41) und dem Haupt-Körper-Leitungs-Abschnitt (42) positioniert, und
der erste Leitungsabschnitt (51) ist zumindest teilweise innerhalb des Kreis-Kegel-Abschnitts (43) positioniert.

7. Ein Schalldämpfer gemäß Anspruch 6, **dadurch gekennzeichnet, dass** der Kreis-Kegel-Abschnitt (43) und der erste Öffnungsabschnitt (41) konzentrisch positioniert sind.

8. Ein Schalldämpfer gemäß Anspruch 7, **dadurch gekennzeichnet, dass** der Haupt-Körper-Leitungs-Abschnitt (42) konzentrisch mit dem Kreis-Kegel-Abschnitt (43) und dem ersten Öffnungsabschnitt (41) positioniert ist.

9. Ein Schalldämpfer gemäß einem der Ansprüche 1 bis 8, **dadurch gekennzeichnet, dass** die zweite Richtung geneigt ist, mit Bezug zu einer Mittenachse (Ax1) des ersten Öffnungsabschnitts (41).

10. Ein Schalldämpfer gemäß Anspruch 9, **dadurch gekennzeichnet, dass** eine Erstreckungs-Linie der Mittenachse (Ax1) des ersten Öffnungsabschnitts (41) mit dem Katalysator (33) überlappt.

11. Ein Schalldämpfer gemäß einem der Ansprüche 1 bis 10, **gekennzeichnet durch**:
einer Auslassleitung (34), wobei die äußere Leitung (31) einen zweiten Öffnungsabschnitt (47) weiterhin beinhaltet, beabstandet von dem ersten Öffnungsabschnitt (41) in der ersten Richtung positioniert, die Auslassleitung (34) beinhaltet einen Endabschnitt (58), positioniert innerhalb der äußeren Leitung (31), und ist in dem zweiten Öffnungsabschnitt (47) eingesetzt, und
der Endabschnitt (58) der Auslassleitung (34) hat eine Form, mit einem Durchmesser, der sich strom-auf vergrößert.

12. Ein Sattel-Reit-Typ-Fahrzeug mit:
einem Fahrzeug-Körper-Rahmen; und
einer Motor-Einheit (7), schwenkbar an dem Fahrzeug-Körper-Rahmen angebracht, die Motor-Einheit (7) beinhaltet: einen Motor (11); eine äußere Abgasleitung (18), verbunden mit dem Motor (11) und dem ersten Öffnungsabschnitt (41); und einen Schalldämpfer (19) gemäß einem der Ansprüche 1 bis 11.

13. Ein Sattel-Reit-Typ-Fahrzeug gemäß Anspruch 12, das weiterhin aufweist:
eine Tandem-Fußablage (28) vom faltbaren Typ, wobei die Motor-Einheit (7) weiterhin einen Kühler (17) beinhaltet, angeordnet quer zu dem Motor (11),
die Tandem-Fußablage (28) ist außerhalb von dem Kühler (17) in einer Fahrzeug-Quer-Richtung positioniert, und
ein äußeres laterales Ende des Schalldämpfers (19) ist innerhalb von einem inneren lateralen Ende von einer Fußablage-Fläche der Tandem-Fußablage (28) in der Fahrzeug-Quer-Richtung positioniert, wenn die Tandem-Fußablage (28) in einem ausgeklappten Zustand (S1) gesetzt ist.

14. Ein Sattel-Reit-Typ-Fahrzeug gemäß einem der Ansprüche 12 und 13, das weiterhin aufweist:
ein Hinterrad (8), drehbar gelagert durch die Motor-Einheit (7), wobei ein hinterer Endabschnitt des Schalldämpfers (19) mit dem Hinterrad (8) in einer FahrzeugSeiten-Ansicht überlappt.

15. Ein Sattel-Reit-Typ-Fahrzeug gemäß einem der Ansprüche 12 bis 14, wobei das Hinterrad (8) eine Felge (25) und einen Reifen (26), angebracht an der Felge (25), beinhaltet, und ein hinterer Endabschnitt der äußeren Leitung (31) des Schalldämpfers (19) ist radial innerhalb von einer inneren Umfangsfläche der Felge (25) positioniert.

16. Ein Sattel-Reit-Typ-Fahrzeug gemäß einem der Ansprüche 12 bis 15, wobei die Motor-Einheit (7) weiterhin eine Klammer (29), angebracht an dem Motor (11), beinhaltet, die Klammer (29) lagert den Schalldämpfer (19) in einem auskragenden Zustand.

## Revendications

1. Silencieux pour véhicule de type à selle, comprenant :
- un catalyseur (33) ;
- un tuyau d'échappement intérieur (32) logeant le catalyseur (33) ; et
- un tuyau extérieur (31) logeant le tuyau d'échappement intérieur (32), le tuyau extérieur (31) incluant : une première portion d'ouverture (41) à laquelle une portion côté amont du tuyau d'échappement intérieur (32) est reliée ; et une portion de tuyau de corps principal (42) s'étendant dans une première direction prédéterminée suivant un axe central (Ax1) de la portion de tuyau de corps principal (42) ; dans lequel le tuyau d'échappement intérieur (32) inclut :
- une première portion de tuyau (51) logeant le catalyseur (33), la première portion de tuyau (51) s'étendant à partir de la première portion d'ouverture (41) dans une deuxième direction inclinée par rapport à la première direction ;
- une deuxième portion de tuyau (52) s'étendant à partir de la première portion de tuyau (51) dans une direction parallèle à la première direction ;
- une troisième portion de tuyau (53) ayant une forme courbée en une forme de U de la deuxième portion de tuyau (52) vers la première portion d'ouverture (41) ; et
- une quatrième portion de tuyau (54) s'étendant à partir de la troisième portion de tuyau (53) dans une direction parallèle à la première direction, **caractérisé en ce que** :
- un axe central (Ax2) de la première portion de tuyau (51) est incliné par rapport à l'axe central (Ax1) de la portion de tuyau de corps principal (42).

2. Silencieux selon la revendication 1, **caractérisé en ce qu'**une pointe de la quatrième portion de tuyau (54) n'est pas recouverte par le catalyseur (33) vu dans une direction perpendiculaire à la première direction.

3. Silencieux selon les revendications 1 ou 2, caractérisé en ce **qu**'un diamètre extérieur de la première portion de tuyau (51) est plus important qu'un diamètre extérieur de la deuxième portion de tuyau (52).

4. Silencieux selon l'une des revendications 1 à 3, **caractérisé en ce qu'**une ligne conceptuelle s'étendant à partir de la quatrième portion de tuyau (54) dans la direction parallèle à la première direction forme une intersection avec le catalyseur (33) dans une vue latérale du silencieux (19).

5. Silencieux selon l'une des revendications 1 à 4, **caractérisé en ce que** la quatrième portion de tuyau (54) inclut une pointe fermée et la quatrième portion de tuyau (54) inclut une ouverture sur une surface latérale de celle-ci, l'ouverture communiquant avec un intérieur de la quatrième portion de tuyau (54).

6. Silencieux selon l'une des revendications 1 à 5, **caractérisé en ce que** le tuyau extérieur (31) inclut une portion de cône circulaire (43) ayant une forme avec un diamètre accru en aval ;
- la portion de cône circulaire (43) est disposée entre la première portion d'ouverture (41) et la portion de tuyau de corps principal (42) ; et
- la première portion de tuyau (51) est au moins partiellement disposée à l'intérieur de la portion de cône circulaire (43).

7. Silencieux selon la revendication 6, **caractérisé en ce que** la portion de cône circulaire (43) et la première portion d'ouverture (41) sont concentriquement disposées.

8. Silencieux selon la revendication 7, **caractérisé en ce que** la portion de tuyau de corps principal (42) est disposée concentriquement à la portion de cône circulaire (43) et la première portion d'ouverture (41).

9. Silencieux selon l'une des revendications 1 à 8, **caractérisé en ce que** la deuxième direction est inclinée par rapport à un axe central (Ax1) de la première portion d'ouverture (41).

10. Silencieux selon la revendication 9, **caractérisé en ce qu'**une ligne d'extension de l'axe central (Ax1) de la première portion d'ouverture (41) est recouverte par le catalyseur (33).

11. Silencieux selon l'une des revendications 1 à 10, **caractérisé par** :
- un tuyau de sortie (34), dans lequel le tuyau extérieur (31) inclut, en outre, une deuxième portion d'ouverture (47) disposée à distance de la première portion d'ouverture (41) dans la première direction ;
- le tuyau de sortie (34) inclut une portion d'extrémité (58) disposée à l'intérieur du tuyau extérieur (31) et est inséré dans la deuxième portion d'ouverture (47) ; et
- la portion d'extrémité (58) du tuyau de sortie (34) a une forme avec un diamètre accru en amont.

12. Véhicule de type à selle, comprenant :
- un châssis de corps de véhicule ; et
- une unité de moteur (7) fixée de façon pivotante au châssis de corps de véhicule, l'unité de moteur (7) incluant : un moteur (11) ; un tuyau d'échappement extérieur (18) reliant le moteur (11) et la première portion d'ouverture (41) ; et un silencieux (19) selon l'une des revendications 1 à 11.

13. Véhicule de type à selle selon la revendication 12, comprenant en outre :
- un repose-pieds en tandem (28) d'un type pliable, dans lequel l'unité de moteur (7) inclut en outre un radiateur (17) disposé latéralement au moteur (11) ;
- le repose-pieds en tandem (28) est disposé à l'extérieur du radiateur (17) dans une direction transversale du véhicule ; et
- une extrémité latérale extérieure du silencieux (19) est positionnée vers l'intérieur d'une extrémité latérale intérieure d'une surface de repose-pieds du repose-pieds en tandem (28) dans la direction transversale du véhicule lorsque le repose-pieds en tandem (28) est établi dans un état déployé (S1).

14. Véhicule de type à selle selon l'une des revendications 12 et 13, comprenant en outre :
- une roue arrière (8) supportée de façon rotative par l'unité de moteur (7), dans lequel une portion d'extrémité arrière du silencieux (19) est recouverte par la roue arrière (8) dans une vue latérale du véhicule.

15. Véhicule de type à selle selon l'une des revendications 12 à 14, dans lequel la roue arrière (8) inclut une jante (25) et un pneumatique (26) fixé à la jante (25) ; et
- une portion d'extrémité arrière du tuyau extérieur (31) du silencieux (19) est positionnée radialement vers l'intérieur d'une surface périphérique intérieure de la jante (25).

16. Véhicule de type à selle selon l'une des revendications 12 et 15, dans lequel l'unité de moteur (7) inclut en outre un support (29) fixé au moteur (11), le support (29) supportant le silencieux (19) dans un état en porte-à-faux.
